# EUROPEAN PATENT APPLICATION

(11) **EP 4 613 416 A1**
(43) Date of publication of application: **10.09.2025**
(21) Application number: 25150715.8
(22) Date of filing: 08.01.2025
(51) Int. Cl.: B23K 26/12, B23K 26/21, B23K 26/70, F16P 1/06, G02B 5/00, B23K 101/36

(54) **MANUFACTURING APPARATUS FOR BATTERY ASSEMBLY, METHOD OF MANUFACTURING BATTERY ASSEMBLY, AND LASER LIGHT ATTENUATION MECHANISM**

(30) Priority: 07.03.2024 JP 2024034710
(71) Applicant: Prime Planet Energy & Solutions, Inc., Chuo-ku, Tokyo 103-0022 (JP)
(72) Inventor: YOSHIDA, Takashi, Tokyo, 103-0022 (JP); TANAKA, Tomomi, Tokyo, 103-0022 (JP)
(74) Representative: Kuhnen & Wacker Patent- und Rechtsanwaltsbüro PartG mbB

(57) **Abstract**

The present application relates to a manufacturing apparatus for a battery assembly (1) having a joining-target portion at which a plurality of members are joined together by laser welding. The manufacturing apparatus includes: a laser (100) that applies laser light (110) toward the joining-target portion; and a laser light attenuation portion (200) that is provided at least at a position facing the laser (100) and that attenuates the laser light (110), wherein the laser light attenuation portion (200) includes a main body, and i) an uneven structure that is provided in a surface of the main body and that diffusely reflects the laser light, or ii) a coolant flow path provided inside the main body.

## Description

### CROSS REFERENCE TO RELATED APPLICATIONS

This nonprovisional application is based on Japanese Patent Application No. 2024-034710 filed on March 7, 2024 with the Japan Patent Office, the entire contents of which are hereby incorporated by reference.

### BACKGROUND OF THE INVENTION

### Field of the Invention

The present technology relates to a manufacturing apparatus for a battery assembly, a method of manufacturing a battery assembly, and a laser light attenuation mechanism.

### Description of the Background Art

Japanese Patent Laying-Open No. 4-41094 discloses a laser welding machine in which laser light is blocked in a laser application block so as to prevent the laser light from being emitted to outside of the apparatus.

### SUMMARY OF THE INVENTION

When the laser light is applied in a lateral direction (direction close to a horizontal direction), it is required to prevent unintended leakage of the laser light more securely. There is still have room for improvement in a conventional laser welding machine.

An object of the present technology is to provide a manufacturing apparatus for a battery assembly, a method of manufacturing a battery assembly, and a laser light attenuation mechanism so as to increase an effect of preventing unintended leakage of laser light.

The present technology provides a manufacturing apparatus for a battery assembly, a method of manufacturing a battery assembly, and a laser light attenuation mechanism as described below.
[1] A manufacturing apparatus for a battery assembly having a joining-target portion at which a plurality of members are joined together by laser welding, the manufacturing apparatus comprising: a laser that applies laser light toward the joining-target portion; and a laser light attenuation portion that is provided at least at a position facing the laser and that attenuates the laser light, wherein the laser light attenuation portion includes a main body, and i) an uneven structure that is provided in a surface of the main body and that diffusely reflects the laser light, or ii) a coolant flow path provided inside the main body.
[2] The manufacturing apparatus for a battery assembly according to [1], wherein the laser light is applied along a direction within ±45° with respect to a horizontal direction.
[3] The manufacturing apparatus for a battery assembly according to [1] or [2], wherein the uneven structure is provided with a recess that reflects the laser light a plurality of times.
[4] The manufacturing apparatus for a battery assembly according to any one of [1] to [3], wherein the main body is composed of a metal.
[5] The manufacturing apparatus for a battery assembly according to any one of [1] to [4], wherein the battery assembly includes a battery cell having an electrode terminal, and a bus bar joined to the electrode terminal, and the joining-target portion is provided between the electrode terminal and the bus bar.
[6] The manufacturing apparatus for a battery assembly according to [5], wherein the battery cell includes a housing having a prismatic shape and having a side surface orthogonal to a first direction, and the laser light is applied along the first direction.
[7] A method of manufacturing a battery assembly, the method comprising: preparing a battery cell including a joining-target portion to be joined to another member; and joining the battery cell and the other member by applying laser light toward the j oining-target portion, wherein a laser light attenuation portion that attenuates the laser light is provided, the laser light attenuation portion includes a main body, and i) an uneven structure that is provided in a surface of the main body and that diffusely reflects the laser light, or ii) a coolant flow path provided inside the main body.
[8] The method of manufacturing a battery assembly according to [7], wherein the laser light is applied along a direction within ±45° with respect to a horizontal direction.
[9] A laser light attenuation mechanism that attenuates laser light, the laser light attenuation mechanism comprising: a main body; and i) an uneven structure that is provided in a surface of the main body and that diffusely reflects the laser light, or ii) a coolant flow path provided inside the main body.
[10] The laser light attenuation mechanism according to [9], wherein the laser light is applied along a direction within ±45° with respect to a horizontal direction.
[11] The laser light attenuation mechanism according to [9] or [10], wherein the uneven structure is provided with a recess that reflects the laser light a plurality of times.
[12] The laser light attenuation mechanism according to any one of [9] to [11], wherein the main body is composed of a metal.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram showing an exemplary manufacturing apparatus for a battery assembly.
Fig. 2 is a diagram showing a modification of the manufacturing apparatus for a battery assembly.
Fig. 3 is a diagram showing an exemplary uneven structure of a surface of a laser light attenuation portion.
Fig. 4 is a diagram for illustrating a shape of the uneven structure shown in Fig. 3.
Fig. 5 shows a modification of the uneven structure of the surface of the laser light attenuation portion.
Fig. 6 is a diagram showing a modification of the structure of the laser light attenuation portion.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is typically a lithium ion battery but the scope of the present technology is not limited thereto, and the term "battery" may include other batteries such as a nickel-metal hydride battery and a sodium-ion battery. In the present specification, the term "electrode" may collectively represent a positive electrode and a negative electrode.

In the present specification, the term "battery cell" is typically a prismatic battery cell but the scope of the present technology is not necessarily limited thereto, and the term "battery cell" may include a cell having another shape, such as a cylindrical battery cell, a pouch battery cell, or a blade battery cell. Further, the "battery cell" can be mounted on vehicles such as a hybrid electric vehicle (HEV), a plug-in hybrid electric vehicle (PHEV), and a battery electric vehicle (BEV). It should be noted that the use of the "battery cell" is not limited to the use in a vehicle.

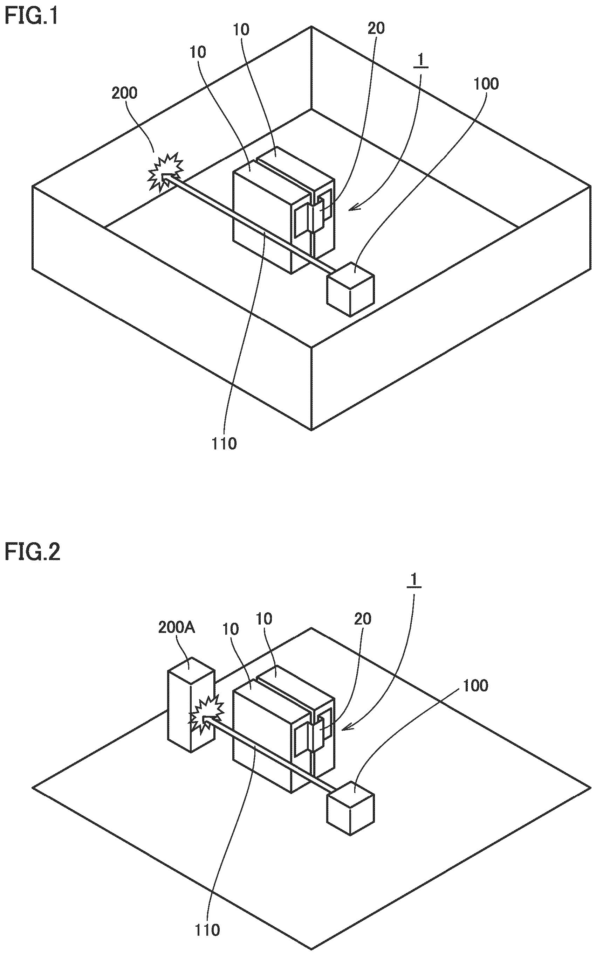

Fig. 1 is a diagram showing an exemplary manufacturing apparatus for a battery assembly 1. As shown in Fig. 1, battery assembly 1 includes a plurality of battery cells 10 and a bus bar 20 that connects battery cells 10. The manufacturing apparatus according to the present embodiment is an apparatus for performing laser welding onto an electrode terminal (not shown) of each battery cell 10 and bus bar 20. It should be noted that the laser welding is not limited to being performed onto the electrode terminal and the bus bar.

The manufacturing apparatus includes: a laser 100 that emits laser light 110; and a laser light attenuation portion 200 (laser light attenuation mechanism) that attenuates laser light 110. In the example of Fig. 1, laser light attenuation portion 200 is provided to surround laser 100 and battery assembly 1; however, the scope of the present technology is not limited thereto, and the laser light attenuation portion may be provided at least at a portion facing laser 100 when laser light 110 is emitted, such as a laser light attenuation portion 200A of Fig. 2.

In the example shown in Figs. 1 and 2, laser 100 emits laser light 110 in a substantially horizontal direction (first direction). A side surface of battery cell 10 that receives laser light 110 extends in a substantially vertical direction. It should be noted that the scope of the present technology is not limited thereto, and laser light 110 may be emitted in a direction within about ±45° (preferably within about ±30°) with respect to the horizontal direction, for example. Moreover, the laser light attenuation mechanism according to the present technology is also applicable to a process other than the manufacturing process for a battery assembly.

In each of Figs. 1 and 2, battery assembly 1 is disposed at a position separated from laser light 110, but battery assembly 1 or laser 100 can be moved to align a joining-target portion (an overlapping portion between the electrode terminal and the bus bar in the example of the present embodiment) in battery assembly 1 with a position to which laser light 110 is to be applied.

Laser light attenuation portion 200 also functions as a "laser light blocking portion" that blocks laser light 110 emitted from laser 100 so as to prevent leakage thereof to outside.

When laser light 110 is emitted in the lateral direction (the horizontal direction or the direction intersecting the horizontal direction at an angle equal to or less than a predetermined value), laser light 110 needs to be prevented more securely from reaching an operator who moves around the manufacturing apparatus.

Laser light attenuation portion 200 according to the present embodiment can increase an effect of preventing unintended leakage of laser light 110. Hereinafter, a specific structure of laser light attenuation portion 200 will be described.

A main body of laser light attenuation portion 200 can be composed of a metal (for example, iron or aluminum) that does not permit passage of laser light 110 therethrough.

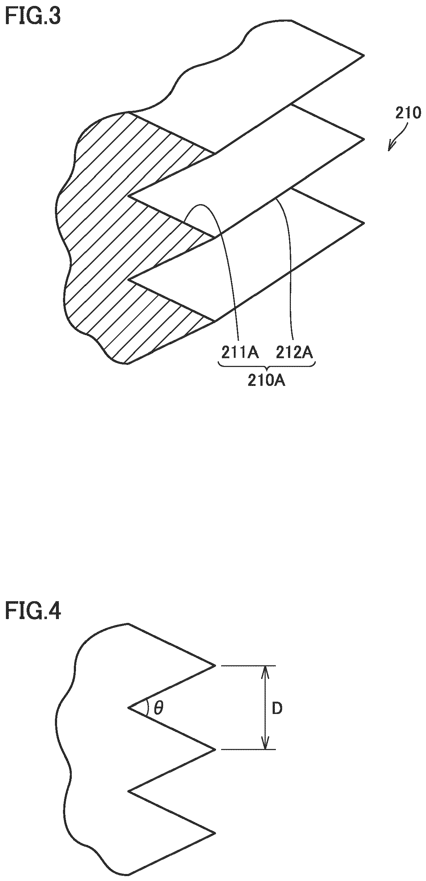

Fig. 3 is a diagram showing an exemplary uneven structure of a surface 210 of laser light attenuation portion 200. As shown in Fig. 3, surface 210 of laser light attenuation portion 200 has an uneven structure 210A provided with recesses 211A and protrusions 212A. Each of recesses 211A is formed as a groove portion having a substantially V shape. An extending direction of recess 211A (groove portion) can be appropriately changed.

Uneven structure 210A shown in Fig. 3 can attenuate energy of laser light 110 by diffusely reflecting laser light 110.

The "diffuse reflection" of laser light 110 includes the incoming light being reflected a plurality of times in recess 211A of uneven structure 210A when viewed macroscopically, and includes dispersed light being generated in the reflected light due to the fine and irregular uneven shape (not shown) of surface 210 when viewed microscopically.

The "diffuse reflection" of laser light 110 in the present embodiment occurs as a result of one or both (combination) of the "plurality of times of reflection" and the "generation of dispersed light".

On surface 210 of laser light attenuation portion 200, laser light 110 is reflected a plurality of times or laser light 110 is diffusely reflected to attenuate the energy of the reflected light, thereby increasing the effect of preventing unintended leakage of laser light 110 to the outside of the manufacturing apparatus (laser application apparatus).

The fine and irregular uneven shape (microscopic unevenness) in surface 210 can be formed by performing, for example, an etching process, an anodizing process, a hairline process, or the like onto surface 210. An average pitch of the microscopic unevenness is preferably equal to or more than the wavelength of laser light 110 to be applied. For example, when the wavelength of laser light 110 to be applied is about 1 µm, the average pitch of the microscopic unevenness is preferably about 1 µm or more. In this way, dispersed light is facilitated to be generated.

Fig. 4 is a diagram for illustrating a macroscopic shape (macroscopic unevenness) of uneven structure 210A shown in Fig. 3. Referring to Fig. 4, an intersection angle (θ) between both side surfaces of recess 211A at its bottom portion is preferably about 45° or less (more preferably, about 30° or less). In this way, the number of times of reflection of laser light 110 in recess 211A can be increased.

Further, a pitch (D) between the plurality of protrusions 212A is preferably equal to or more than the beam diameter of laser light 110 to be emitted from laser 100. In this way, a whole of the beam of laser light 110 can be included in the wedge of recess 211A.

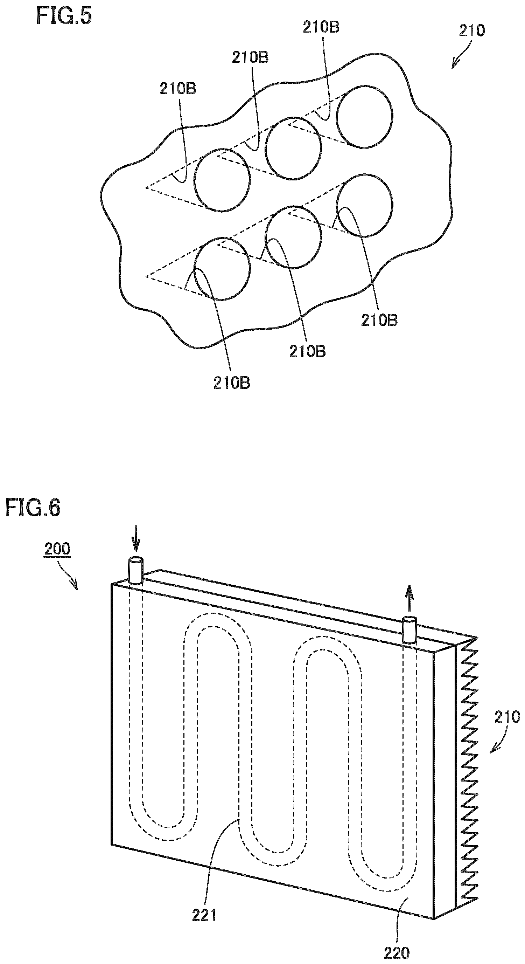

Fig. 5 shows a modification of the uneven structure of surface 210 of laser light attenuation portion 200. As shown in Fig. 5, each uneven structure 210B formed in surface 210 according to the modification is provided with a substantially conical hole portion. Also in the structure shown in Fig. 5, laser light 110 is reflected a plurality of times in the substantially conical hole portion to cause diffuse reflection, thereby attenuating the energy of the reflected light.

Fig. 6 is a diagram showing a modification of the structure of laser light attenuation portion 200. In the modification shown in Fig. 6, a coolant flow path 221 is provided inside main body 220 on its side (rear surface side) opposite to surface 210 as viewed from laser 100. In this way, cooling of laser light attenuation portion 200 can be promoted.

When laser light 110 is applied, laser light attenuation portion 200 generates heat. When an amount of the generated heat becomes too large, laser light attenuation portion 200 may be deformed or damaged. Since coolant flow path 221 is provided inside main body 220 of laser light attenuation portion 200 so as to promote cooling of laser light attenuation portion 200 as in the example of Fig. 6, the amount of the generated heat of laser light attenuation portion 200 can be suppressed from being too large when laser light 110 is applied.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A manufacturing apparatus for a battery assembly (1) having a joining-target portion at which a plurality of members are j oined together by laser welding, the manufacturing apparatus comprising:
a laser (100) that applies laser light (110) toward the joining-target portion; and
a laser light attenuation portion (200) that is provided at least at a position facing the laser (100) and that attenuates the laser light (110), wherein
the laser light attenuation portion (200) includes
a main body (220), and
i) an uneven structure (210A, 210B) that is provided in a surface of the main body (220) and that diffusely reflects the laser light (110), or
ii) a coolant flow path (221) provided inside the main body (220).

2. The manufacturing apparatus for a battery assembly according to claim 1, wherein the laser light (110) is applied along a direction within ±45° with respect to a horizontal direction.

3. The manufacturing apparatus for a battery assembly according to claim 1 or 2, wherein the uneven structure (210A, 210B) is provided with a recess that reflects the laser light (110) a plurality of times.

4. The manufacturing apparatus for a battery assembly according to any one of claims 1 to 3, wherein the main body (220) is composed of a metal.

5. The manufacturing apparatus for a battery assembly according to any one of claims 1 to 4, wherein
the battery assembly (1) includes a battery cell (10) having an electrode terminal, and a bus bar (20) joined to the electrode terminal, and
the joining-target portion is provided between the electrode terminal and the bus bar.

6. The manufacturing apparatus for a battery assembly according to claim 5, wherein
the battery cell (10) includes a housing having a prismatic shape and having a side surface orthogonal to a first direction, and
the laser light (110) is applied along the first direction.

7. A method of manufacturing a battery assembly, the method comprising:
preparing a battery cell (10) including a joining-target portion to be joined to another member (20); and
joining the battery cell (10) and the other member (20) by applying laser light (110) toward the joining-target portion, wherein
a laser light attenuation portion (200) that attenuates the laser light (110) is provided,
the laser light attenuation portion (200) includes
a main body (220), and
i) an uneven structure (210A, 210B) that is provided in a surface of the main body (220) and that diffusely reflects the laser light (110), or
ii) a coolant flow path (221) provided inside the main body (220).

8. The method of manufacturing a battery assembly according to claim 7, wherein the laser light (110) is applied along a direction within ±45° with respect to a horizontal direction.

9. A laser light attenuation mechanism (200) that attenuates laser light (110), the laser light attenuation mechanism (200) comprising:
a main body (220); and
i) an uneven structure (210A, 210B) that is provided in a surface of the main body (220) and that diffusely reflects the laser light (110), or
ii) a coolant flow path (221) provided inside the main body (220).

10. The laser light attenuation mechanism according to claim 9, wherein the laser light (110) is applied along a direction within ±45° with respect to a horizontal direction.

11. The laser light attenuation mechanism according to claim 9 or 10, wherein the uneven structure (210A, 210B) is provided with a recess (211A) that reflects the laser light (110) a plurality of times.

12. The laser light attenuation mechanism according to any one of claims 9 to 11, wherein the main body (220) is composed of a metal.
